# EUROPÄISCHE PATENTSCHRIFT

(11) **EP 1 361 131 B1**
(45) Veröffentlichungstag und Bekanntmachung des Hinweises auf die Patenterteilung: **09.08.2006**
(21) Anmeldenummer: 03010300.6
(22) Anmeldetag: 07.05.2003
(51) Int. Cl.: B60T 17/00

(54) **Druckluftaufbereitungseinrichtung für Kfz-Druckluftanlagen**
Compressed air processing device for vehicle air system
Dispositif de traitement du air pour une installation à air comprimé de véhicle

(30) Priorität: 10.05.2002 DE 10220789
(43) Veröffentlichungstag der Anmeldung: 12.11.2003
(73) Patentinhaber: Haldex Brake Products GmbH, 69123 Heidelberg (DE)
(72) Erfinder: Heer, Siegfried, 69168 Wiesloch (DE)
(74) Vertreter: Rehberg Hüppe + Partner

(56) Entgegenhaltungen:
- WO-A-00/07863
- DE-A- 4 421 575
- DE-C- 19 544 621
- DE-C- 19 649 498
- DE-C- 19 700 243

## Beschreibung

Die Erfindung bezieht sich auf eine Druckluftaufbereitungseinrichtung für Kraftfahrzeug-Druckluftanlagen mit den im Oberbegriff der Ansprüche 1 und 2 angegebenen Merkmalen. Solche Druckluftaufbereitungseinrichtungen weisen in aller Regel einen Druckregler, einen Lufttrockner und ein Mehrkreisschutzventil auf. Diese Teile sind zu einer gemeinsamen Baueinheit zusammengefügt. Eine solche gemeinsame Baueinheit ist dem Kompressor einer Druckluftbeschaffungseinrichtung nachgeschaltet.

Eine Druckluftaufbereitungseinrichtung der eingangs beschriebenen Art ist aus der DE 195 44 621 C1 bekannt. In einem gemeinsamen Gehäuse, welches auch unterteilt ausgebildet sein kann, ist ein Druckregler und ein Lufttrockner mit ihren entsprechenden Elementen untergebracht. Das Mehrkreisschutzventil ist für mehrere Kreise ausgebildet und angeordnet, die von dem Gehäuse abzweigen. Jeder Kreis besitzt ein Überströmventil mit begrenzter Rückströmung. Zu diesem Zweck weist jedes Überströmventil eine bewegliche Wand auf, die auf einer Feder abgestützt ist. Auf der anderen Seite ist eine Wirkfläche vorgesehen, die anströmseitig von einem Anströmraum beaufschlagt wird, der in dauernder Verbindung zu einer Zentralbohrung für die Verteilung der ankommenden Druckluft steht. Die bewegliche Wand des Überströmventils mit begrenzter Rückströmung weist anströmseitig zwei Wirkflächen auf, nämlich die eine bereits beschriebene Wirkfläche und die andere Wirkfläche, die in geöffnetem Zustand hinzutritt bzw. ebenfalls beaufschlagt wird. Die bewegliche Wand ist auf einer Feder abgestützt, die von einem Federraum umgeben wird. Zwischen Anströmraum und Federraum ist eine Umgehungsleitung vorgesehen, in der ein Magnetventil mit eigenem Entlüftungsanschluss angeordnet ist. Dieses Magnetventil ist in stromlosem Zustand geschlossen, so dass der Federraum des Überströmventils an die Atmosphäre angeschlossen ist. Wenn das Magnetventil angesteuert wird, schaltet es in seine andere stellung um, d. h. der Entlüftungsanschluss wird abgesperrt und der Federraum wird mit dem Anströmraum verbunden, so dass damit zusätzlich zu der von der Feder aufgebrachten Kraft eine Zusatz-oder Hilfskraft entsteht, die bestrebt ist, das Überströmventil zu schließen bzw. geschlossen zu halten. Damit bekommt das Überströmventil Mehrfachfunktion. Es funktioniert bei Anschluss des Rückraumes an die Atmosphäre in üblicher Weise, d. h. erbringt die vorteilhaften Funktionen eines Überströmventils mit begrenzter Rückströmung. Wird dagegen der Rückraum mit dem gleichen Druck versorgt wird der Ansteuerraum auf der anderen Seite der beweglichen Wand, dann sorgt die Kraft der Feder im Rückraum dafür, dass das Überströmventil geschlossen wird, also gleichsam als Absperrventil in Funktion tritt. Damit ist es möglich, den betreffenden Kreis, insbesondere im Defektfall, gezielt abzusperren. Dies kommt dann wiederum den anderen, nicht-abgesperrten Kreisen zugute, d. h. ein Notbetrieb kann auch im Störungsfall für diese anderen Kreise aufrecht erhalten werden. Weiterhin kann auf diese Weise das Mehrkreisschutzventil bzw. das jeweilige Überströmventil auch zum Zwecke einer Druckbegrenzung genutzt werden. Nachteilig dagegen ist, dass das Überströmventil mit begrenzter Rückströmung vor Erreichen seines Öffnungsdruckes nicht geöffnet werden kann. Ein weiterer wesentlicher Nachteil der bekannten Druckluftaufbereitungseinrichtung besteht darin, dass bei Verwendung unterschiedlicher Drücke in den einzelnen Kreisen und Benutzung eines Überströmventils als Druckbegrenzer dieser Kreis mit dem begrenzten Druck bei Ausfall der elektrischen Versorgung oder Abschaltung der Zündung des Fahrzeuges einen erhöhten Druck bekommt, der gesetzlich nicht zugelassen ist.

Eine weitere ähnlich aufgebaute Druckluftaufbereitungseinrichtung mit einem Druckregler, einem Lufttrockner und einem Mehrkreisschutzventil ist aus der PCT-Anmeldung mit der Veröffentlichungsnummer WO 00/07863 bekannt. Jedem Kreis ist ein Überströmventil mit begrenzter Rückströmung zugeordnet. Zu diesem Zweck weist jedes Überströmventil eine bewegliche Wand auf, die auf einer Feder abgestützt ist. Anströmseitig besitzt das Ventilglied des Überströmventils zwei Wirkflächen, von denen die eine unter ständiger Verbindung mit der Zentralbelüftung steht, während die andere nach dem Öffnen des Überströmventils von dem Druck des Behälters des betreffenden Kreises beaufschlagt wird. Bei einem solchen Überströmventil mit begrenzter Rückströmung ergibt sich eine Hysterese zwischen Öffnungs- und Schließdruck. Dem Ventilglied des Überströmventils ist ein separater Steuer-oder Absperrkolben zugeordnet, der abströmseitig zu dem Ventilglied des Überströmventils eine dritte Wirkfläche aufweist. Diese dritte Wirkfläche ist über eine Umgehungsleitung, die an die Zentralbelüftung angeschlossen ist, beaufschlagbar, wenn ein in der Umgehungsleitung angeordnetes magnetventil mit eigenem Entlüftungsanschluss erregt wind. Wenn das Magnetventil erregt, also angesteuert wird, schaltet es in seine andere Stellung um, d. h. der Entlüftungsanschluss wird abgesperrt und die dritte Wirkfläche wird mit Druckluft beaufschlagt, so dass der separate Steuer- oder Sperrkolben das Überströmventil schließt, indem er jegliche Bewegung des Ventilkörpers des Überströmventils aus der geschlossenen Stellung heraus verhindert. Damit bekommt das Überströmventil zusätzlich die Funktion eines Absperrventils, d. h. bei direkter Betätigung, also bei Belüftung des gesonderten Steuerkolbens, tritt das gewünschte Ergebnis, nämlich das Absperren bzw. Blockieren der geschlossenen Stellung des Überströmventils ein. Diese Möglichkeit mag zwar im Defektfall sinnvoll sein, wenn es darum geht, den betreffenden Kreis abzusperren. Ein willkürliches Öffnen des Überströmventils unterhalb seines Öffnungsdruckes ist mit einer solchen Konstruktion jedoch nicht möglich.

Eine weitere ganz ähnliche Druckluftaufbereitungseinrichtung ist aus der DE 197 00 243 C1 bekannt. Auch hierbei ist die über das Magnetventil direkt beaufschlagbare Wirkfläche auf der dem Anströmraum abgekehrten Seite der beweglichen Wand und damit auf der Seite der Feder angeordnet. Für nachrangige Kreise wird ein gesondertes Druckbegrenzungsventil eingesetzt, welches dem jeweiligen Überströmventil des betreffenden Kreises nachgeschaltet ist. In diesem Falle wird das Überströmventil nur mit seiner normalen pneumatischen Funktion benutzt und es ist das Druckbegrenzungsventil, welches über das Magnetventil zusätzlich beeinflusst werden kann. Aber auch damit ist es nicht möglich, das Überströmventil unterhalb des vorgesehenen Öffnungsdruckes willkürlich, d. h. bei Bedarf, zu öffnen. Die Betätigung des Magnetventiles führt vielmehr nur dazu, dass die Druckbegrenzungsfunktion des Druckbegrenzers abgeschaltet wird.

Eine weitere Druckluftaufbereitungseinrichtung ist aus der DE 44 21 575 C2 bekannt. Auch hierbei sind ein Druckregler, ein Lufttrockner und ein Mehrkreisschutzventil zusammengefügt. Die einzelnen Kreise sind durch Rückschlagventile abgesichert, die durch einen über ein Magnetventil zu schaltenden Betätigungskolben aufgestoßen werden können. Die Kreise können aber auch durch Überströmventile mit begrenzter Rückströmung abgesichert sein. Auch hierbei ist jedem Überströmventil jedes Kreises ein Magnetventil zugeordnet. Das Magnetventil ist in nicht erregtem Zustand offen, d. h. der Federraum des Überströmventils ist mit dem Anströmraum verbunden. Damit besitzt das Überströmventil einen vergleichsweise erhöhten Öffnungsdruck. In erregtem Zustand schaltet das Magnetventil um und entlüftet den Federraum. Auch hier ist die über das Magnetventil beaufschlagte Wirkfläche auf der dem Anströmraum abgekehrten Seite der beweglichen Wand, also in dem Federraum vorgesehen. Dies führt dazu, dass bei einer Befüllung sich die insoweit größere Wirkfläche des Federraums so auswirkt, dass das Überströmventil nicht öffnen kann, es sei denn, das Magnetventil schaltet in die Stellung um, in der der Federraum an die Atmosphäre angeschlossen wird. Damit ist der Nachteil verbunden, dass bei Ausfall der Elektrik eine Versorgung der Kreise nicht möglich ist. Andererseits ist es bei intakter elektrischer Versorgung nicht möglich, das Überströmventil eines Kreises vor Erreichen des festgelegten Öffnungsdruckes des Überströmventils zu öffnen.

Der Erfindung liegt die Aufgabe zugrunde, eine Druckluftaufbereitungseinrichtung der eingangs beschriebenen Art dahingehend weiterzubilden, dass das Überströmventil mindestens eines Kreises auch unterhalb seines Öffnungsdruckes willkürlich, d. h. bei Bedarf oder zur Erreichung einer besonderen Funktion, geöffnet werden kann, so dass Druckluft zu dem Vorratsbehälter des betreffenden Kreises strömen kann.

Erfindungsgemäß wird dies bei einer Druckluftaufbereitungseinrichtung der eingangs beschriebenen Art dadurch erreicht, dass die über das Magnetventil direkt beaufschlagbare Wirkfläche auf der dem Anströmraum zugekehrten Seite der beweglichen Wand des Überströmventils angeordnet ist oder die über das Magnetventil indirekt beaufschlagbare Wirkfläche auf der dem Anströmraum abgekehrten Seite der beweglichen Wand des Überströmventils angeordnet ist.

Die Erfindung geht von dem Gedanken aus, die Öffnungsmöglichkeiten für die Überströmventile einzelner Kreise zu erweitern und beispielsweise eine bevorzugte Befüllung einzelner Kreise auch unterhalb des Öffnungsdruckes des betreffenden Überströmventils in sehr einfacher Weise realisieren zu können. Dabei wird in bekannter Weise auch die Sicherheitsfunktion eines Überströmventiles beibehalten bzw. genutzt. Dies bedeutet, dass bei Wegnahme der direkten oder indirekten Beaufschlagung das Überströmventil einen Schließdruck hat, der unterhalb seines Öffnungsdruckes liegt.

Es gibt grundsätzlich zwei Realisierungsmöglichkeiten, nämlich in Verbindung mit direkter oder mit indirekter Beaufschlagung einer Wirkfläche an dem Magnetventil. Unter direkter Beaufschlagung wird ein Magnetventil verstanden, das in stromlosem Zustand die Wirkfläche an die Atmosphäre angeschlossen, also entlüftet, hält und in erregtem Zustand die Wirkfläche mit Druckluft beaufschlagt. Unter indirekter Beaufschlagung wird ein Magnetventil verstanden, das in stromlosem Zustand die Wirkfläche belüftet hält und in erregtem Zustand die Wirkfläche an die Atmosphäre anschließt, also entlüftet. In Zuordnung dazu muss diese Wirkfläche auf der dem Anströmraum zugekehrten Vorderseite oder abgekehrten Rückseite des Stufenkolbens angeordnet sein.

Bei einem Druckluftverbrauch in dem betreffenden Kreis fällt der Druck ab und bei Unterschreiten des Schließdruckes des Überströmventils wird der betreffende Kreis abgesperrt und damit abgesichert. Bei der erfindungsgemäßen Ausbildung ist es möglich, durch eine entsprechende Steuerung der Magnetventile über eine elektronische Steuereinheit auch unterhalb des Schließdruckes der Überströmventile einen Luftaustausch zwischen einzelnen Kreisen bereitzustellen. Dies gilt insbesondere für das Nachfüllen eines der Anhängerbremsung zugeordneten Bremskreise.

Für die Ausbildung des Überströmventils mit dem zugeordneten Magnetventil gibt es verschiedene Realisierungsmöglichkeiten. Das Magnetventil mit eigenem Entlüftungsanschluss kann so angeordnet und geschaltet sein, dass es in erregtem Zustand die Entlüftungsöffnung absperrt und den Anströmraum mit dem der Wirkfläche zugeordneten Wirkraum verbindet. In nicht erregtem Zustand wird dagegen der der Wirkfläche zugeordnete Wirkraum an die Atmosphäre angeschlossen, während die Verbindung zu dem Anströmraum des Überströmventils abgesperrt ist. Dies bedeutet gleichzeitig, dass bei Ausfall der elektrischen Versorgung das Überströmventil seine normale pneumatische Funktion erfüllen kann. Freilich ist es in diesem Falle nicht möglich, das Überströmventil unterhalb seines Öffnungsdruckes zu öffnen.

Die bewegliche Wand weist auf ihrer dem Anströmraum zugekehrten Seite somit eine erste anströmseitig dauernd beaufschlagte Wirkfläche, eine zweite abströmseitig dauernd beaufschlagte Wirkfläche und die dritte, über das Magnetventil beaufschlagte Wirkfläche auf. Bei diesen Wirkflächen handelt es sich also um Teilwirkflächen, die auf einer Seite der beweglichen Wand verwirklicht sind, nämlich auf der Seite, die dem Federraum abgekehrt ist. Es versteht sich, dass diese Teilwirkflächen in entsprechender Weise gegeneinander abgesichert sind. Bei Erreichen des Öffnungsdruckes des Überströmventils wird die erste und die zweite Wirkfläche miteinander verbunden, so dass der Durchgang von der Zentralbelüftung der Druckluftaufbereitungseinrichtung in den Vorratsbehälter des betreffenden Kreises gewährleistet ist.

Eine weitere Ausführungsmöglichkeit, bei der die dritte Wirkfläche der beweglichen Wand des Überströmventils indirekt beaufschlagt oder freigegeben wird, ist auch möglich. Dabei ist das Magnetventil mit eigenem Entlüftungsanschluss dann so angeordnet und geschaltet, dass es in erregtem Zustand den Entlüftungsanschluss öffnet und geöffnet hält und eine die bewegliche Wand überbrückende Umgehungsleitung absperrt, so dass die auf der dem Anströmraum abgekehrte Seite angeordnete Wirkfläche nicht mehr belastet wird bzw. die auf der dem Anströmraum zugekehrten Seite angeordnete Wirkfläche durch die Entlüftung des Wirkraumes der dritten Wirkfläche nicht mehr entlastet wird. Bei dieser Ausführungsform besitzt die bewegliche Wand, die wiederum als Stufenkolben oder aber auch als Membrankolben ausgebildet sein kann, gleichsam auf beiden Seiten zusätzliche Teilwirkflächen. Diese Teilwirkflächen sind über eine Umgehungsleitung miteinander verbunden, so dass bei nicht erregtem Magnetventil diesbezüglich ein Druckausgleich stattfindet und sich somit der Druck aus der Zentralbelüftung nur auf der normalen Teilwirkfläche der beweglichen Wand des Überströmventils auswirken kann. Wird dagegen das Magnetventil umgeschaltet, so wird die Umgehungsleitung unterbrochen und die dem Federraum zugekehrte Wirkfläche an die Atmosphäre angeschlossen, so dass hier eine vorher wirksame Kraft in Fortfall kommt. Damit kann sich die auf der dem Anströmraum zugekehrten Seite einwirkende Kraft nunmehr im Sinne einer Öffnung des Überströmventils auswirken.

Die bewegliche Wand kann wiederum in verschiedener Weise ausgebildet werden. Eine bevorzugte Ausführungsmöglichkeit besteht in der Ausbildung als Stufenkolben. Der Kolben ist dabei aus festem Material ausgebildet, insbesondere aus Metall. Er ist gestuft gestaltet und mit den entsprechenden Dichtungen versehen.

Eine andere Realisierungsmöglichkeit für die bewegliche Wand besteht darin, dass sie als Membrankolben ausgebildet ist. In diesem Falle besteht die bewegliche Wand aus elastischem Material, welches begrenzt nachgiebig gestaltet ist. Der Membrankolben kann randseitig, d. h. gehäuseseitig eingespannt sein oder mit entsprechenden Bewegungslippen versehen sein, um selbst auch an dieser Stelle eine Bewegung auszuführen bzw. zuzulassen.

In Weiterbildung der Erfindung ist es möglich, dass dem Überströmventil mit begrenzter Rückströmung ein Druckbegrenzer nachgeschaltet ist, der einen in Öffnungsrichtung auf einer Begrenzungsfeder abgestützten Kolben aufweist und auf der der Begrenzungsfeder zugekehrten Seite eine Betätigungsfläche aufweist, deren Betätigungsraum über eine Verbindungsleitung an den Wirkraum der dritten Wirkfläche des Überströmventils angeschlossen ist. Dies bedeutet, dass das Magnetventil nicht nur dem Überströmventil, sondern gleichzeitig auch dem Druckbegrenzer zugeordnet ist. Beim Umschalten des Magnetventils wirkt sich dies sowohl auf das Überströmventil wie auch auf den Druckbegrenzer aus. Das Überströmventil und der Druckbegrenzer werden gemeinsam geöffnet, so dass auch in diesem Falle der Vorratsbehälter des betreffenden Kreises bevorzugt befüllt werden kann. Auch hier gibt es wieder für die konstruktive Realisierung des Druckbegrenzers verschiedene Möglichkeiten.

Die gemeinsame Zuordnung eines Magnetventils zu dem Überströmventil und einem Druckbegrenzer eines betreffenden Kreises ist auch dann möglich, wenn die indirekt beaufschlagbare Wirkfläche an dem Überströmventil verwirklicht wird. In diesem Falle ist dem Überströmventil mit begrenzter Rückströmung ebenfalls ein Druckbegrenzer nachgeschaltet, der einen in Öffnungsrichtung auf einer Begrenzungsfeder abgestützten Kolben aufweist und auf der der Begrenzungsfeder jedoch abgekehrten Seite eine Entlastungsfläche aufweist, deren Betätigungsraum über eine Verbindungsleitung an den Wirkraum der dritten Wirkfläche des Überströmventils angeschlossen ist. Damit wird beim Erregen des Magnetventils sowohl der Wirkraum wie auch der Entlastungsraum des Druckbegrenzers an die Atmosphäre angeschlossen, so dass beide Ventile geöffnet werden können. Es ist auch möglich, die Anordnungsreihenfolge zwischen Überströmventil und Druckbegrenzer umzukehren, also in Fließrichtung des Druckmediums zunächst den Druckbegrenzer und diesem nachgeschaltet das Überströmventil anzuordnen.

Die Erfindung wird anhand verschiedener Ausführungsbeispiele weiter erläutert und beschrieben. Es zeigen:
- Fig. 1: eine schematisierte Schnittdarstellung durch eine Druckluftaufbereitungseinrichtung mit Darstellung aller wesentlicher Elemente,
- Fig. 2: eine Detaildarstellung von Teilen der Druckluftaufbereitungseinrichtung, die einem Kreis zugeordnet sind,
- Fig. 3: eine ähnliche Darstellung wie Fig. 2, jedoch in einer anderen Ausführungsform,
- Fig. 4: eine weitere Ausführungsform für das Überströmventil und den Druckbegrenzer, und
- Fig. 5: eine weitere Ausführungsform des Überströmventils ohne einen nachgeschalteten Druckbegrenzer.

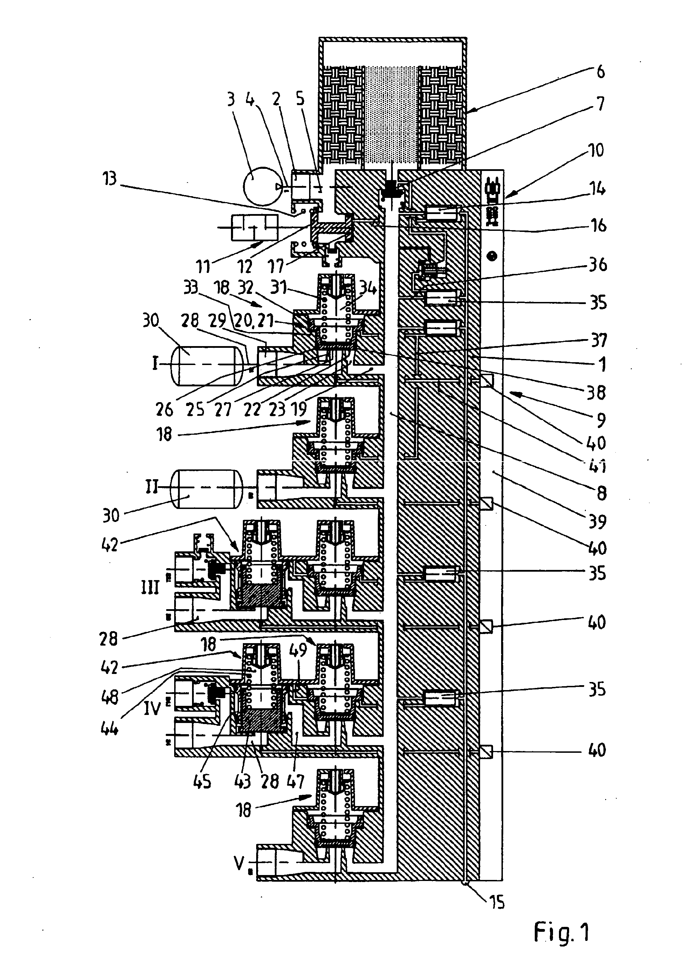

In Fig. 1 ist eine Druckluftaufbereitungseinrichtung für Kraftfahrzeug-Druckluftanlagen dargestellt, die schematisch ein gemeinsames Gehäuse 1 erkennen lässt, in dem bzw. an dem wesentliche Elemente der Aufbereitungseinrichtung untergebracht sind. Das Gehäuse 1 weist einen Anschluss 2 auf, an welchen eine von einem Kompressor 3 herangeführte Verbindungsleitung 4 angeschlossen ist. Der Anschluss 2 führt zu einem Verteilungsraum 5, von dem die herangeführte Druckluft einerseits über einen Lufttrockner 6 strömt und vor ein Rückschlagventil 7 gelangt. Bei aufgestoßenem Rückschlagventil 7 gelangt die Druckluft in eine Zentralbohrung 8, an der die einzelnen Kreise angeschlossen sind. Es wird hier die Funktion eines integrierten Mehrkreisschutzventiles 9 erreicht. In dem Gehäuse 1 ist weiterhin ein Druckregler 10 integriert, der hier als elektrischer Druckregler ausgebildet ist. Der Druckregler 10 weist ein Auslassventil 11 auf, dessen Kolben 12 auf einer Schließfeder 13 abgestützt ist. Zu dem Auslassventil 11 gehört ein Magnetventil 14, welches mit Druckluft aus der Zentralbohrung 8 versorgt wird, einen eigenen Entlüftungsanschluss 15 aufweist und über das Druckluft über eine Leitung 16 zu einem Betätigungskolben 17 gelangen kann, um das Auslassventil 11 zu öffnen.

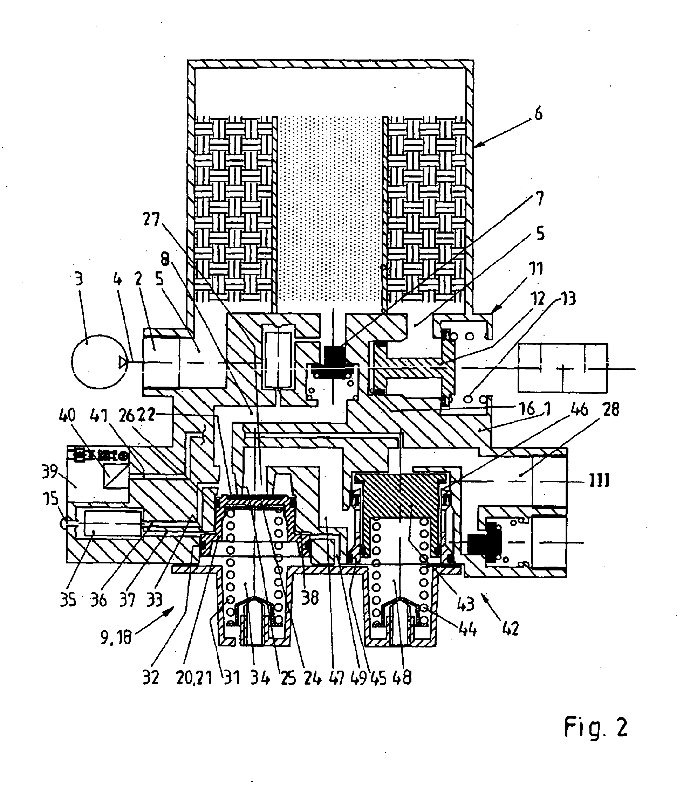

Für jeden Kreis I, II, III, IV und V ist je ein Überströmventil 18 mit begrenzter Rückströmung vorgesehen, welches über eine Leitung 19 an die Zentralbohrung 8 angeschlossen und von dort mit Druckluft versorgt wird. Das Überströmventil 18 weist eine bewegliche Wand 20 auf, die hier in Form eines Stufenkolbens 21 realisiert ist. Die bewegliche Wand 20 bzw. der Stufenkolben 21 weist anströmseitig eine erste Wirkfläche 22 auf, vor der ein Anströmraum 23 gebildet ist, der über die Leitung 19 in dauernder Verbindung zu der Zentralbohrung 8 steht. Die bewegliche Wand 20 bzw. der Stufenkolben 21 trägt stirnseitig eine Dichtungsplatte 24 (Fig. 2), die mit einem eingezogenen Rand 25 ein Durchlassventil 24, 25 bildet. Der Stufenkolben 21 besitzt eine Dichtung 26, so dass die Wirkfläche 22 zwischen dieser Dichtung 26 und dem eingezogenen Rand 25 begrenzt ist. Der Stufenkolben 21 weist eine zweite Wirkfläche 27 auf, die von dem eingezogenen Rand 25 als Kreisfläche umgeben und damit festgelegt ist. Diese zweite Wirkfläche 27 wird dauernd abströmseitig beaufschlagt, d. h. von ihr führt eine Leitung 28 über einen Anschluss 29 zu einem Vorratsbehälter 30, der dem Kreis I zugeordnet ist. Der Stufenkolben 21 bzw. die bewegliche Wand 20 ist auf der dem Anströmraum 23 abgekehrten Rückseite auf einer Feder 31 abgestützt, die gehäuseseitig aufgelagert und über einen Federteller mit Einstellschraube einstellbar ausgebildet sein kann. Durch die eingestellte Kraft der Feder 31 in Verbindung mit der Bemessung der ersten Wirkfläche 22 wird der Öffnungsdruck des Überströmventils 18 festgelegt, bei welchem das Durchlassventil 24, 25 öffnet.

Der Stufenkolben 21 bzw. die bewegliche Wand 20 weist eine weitere Dichtung 32 auf, die an einem gestuften Teil mit vergrößertem Durchmesser ausgebildet ist. Zwischen den Dichtungen 26 und 32 ist eine dritte Wirkfläche 33 realisiert. Auch diese dritte Wirkfläche 33 ist auf der dem Anströmraum 23 zugekehrten Seite des Stufenkolbens 21 angeordnet. Die Feder 31 ist in einem Rückraum 34 angeordnet, der zur Vermeidung eines Druckaufbaus dauernd an die Atmosphäre angeschlossen ist.

Dem Überströmventil 18 ist ein Magnetventil 35 zugeordnet. Das Magnetventil 35 besitzt einen eigenen Entlüftungsanschluss 15, der hier konstruktiv mit dem Entlüftungsanschluss 15 des Magnetventils 14 zusammengefasst ist. Eingangsseitig ist eine Leitung 36 vorgesehen, über die das Magnetventil 35 mit Druckluft aus der Zentralbohrung 8 versorgt wird. Von dem Magnetventil 35 zweigt eine Steuerleitung 37 ab, die zu einem Wirkraum 38 führt, der der dritten Wirkfläche 33 des Stufenkolbens 21 zugeordnet ist. Am oder im Gehäuse 1 ist auch eine Steuereinheit 39 verwirklicht, über die das Magnetventil 35 sowie auch die übrigen Magnetventile elektrisch angesteuert werden (nicht dargestellt).

In gleicher Weise wie oben beschrieben besitzt jeder der Kreise I, II, III, IV und V je ein solches Überströmventil 18 mit begrenzter Rückströmung. Den beiden Überströmventilen 18 mit begrenzter Rückströmung der Kreise I und II ist hier ein einziges Magnetventil 35 zugeordnet. Der Kreis III besitzt ein weiteres solches Magnetventil 35, ebenso der Kreis IV. Der Kreis V besitzt ein solches Magnetventil 35 nicht. Den einzelnen Kreisen sind Druckspannungswandler 40 zugeordnet, die über Leitungen 41 jeweils mit den betreffenden Vorratsbehältern 30 der jeweiligen Kreise verbunden sind. Die Druckspannungswandler 40 können im Bereich der elektronischen Steuereinheit 39 angeordnet sein.

Wie anhand der Fig. 1 ersichtlich ist, können die Kreise III und IV noch einmal aufgeteilt sein, wobei ein solcher Teilkreis über ein zusätzliches Rückschlagventil abgesichert sein kann.

In der jeweiligen Leitung 28 von der Zentralbohrung 8 zu dem jeweiligen Vorratsbehälter 30 der Kreise I und II ist nur jeweils ein Überströmventil 18 mit begrenzter Rückströmung angeordnet. Gleiches gilt für den Kreis V, wobei jedoch dort ein Vorratsbehälter in Fortfall kommt. Bei den Kreisen III und IV ist dem jeweiligen Uberströmventil 18 mit begrenzter Rückstrëmung ein Druckbegrenzer 42 nachgeschaltet. Der Druckbegrenzer 42 weist einen Kolben 43 auf, der auf einer Begrenzungsfeder 44 abgestützt ist. Auch die Kraft der Begrenzungsfeder 44 kann einstellbar ausgebildet sein. Der Kolben 43 des Druckbegrenzers 42 ist von einem gehäusefest gelagerten Einsatz 45 umgeben (Fig. 2), der, wie aus der Zeichnung ersichtlich ist, abgedichtet und angeordnet untergebracht ist. Der Kolben 43 bildet mit einem Rand 46 des Einsatzkörpers 45 ein Durchlassventil für Druckluft, die über eine Leitung 47 von dem Überströmventil 18 herangeführt wird. Von dem Druckbegrenzer 42 führt hier die Leitung 28 zu dem betreffenden Vorratsbehälter 30 des betreffenden Kreises (nicht dargestellt). Die Begrenzungsfeder 44 ist in einem Betätigungsraum 48 untergebracht. Der Betätigungsraum 48 ist über eine Verbindungsleitung 49 mit dem Wirkraum 38 der dritten Wirkfläche 33 des betreffenden Überströmventils 18 verbunden, so dass sich eine Schaltbewegung des Magnetventils 35 hier in den Kreisen III und IV auch auf den jeweiligen nachgeschalteten Druckbegrenzer 42 auswirkt.

In Fig. 2 ist am Beispiel des Kreises III die konstruktive Ausbildungsmöglichkeit des Überströmventils 18 mit begrenzter Rückströmung und des nachgeschalteten Druckbegrenzers 42 nochmals in vergrößerter Darstellung wiedergegeben. Es ist leicht vorstellbar, dass das Überströmventil 18 mit begrenzter Rückströmung auch einem anderen der Kreise zugeordnet sein könnte. Ebenso ist vorstellbar, dass die Schaltungsreihenfolge des Überströmventils 18 und des Druckbegrenzers 42 umgekehrt angeordnet werden könnte.

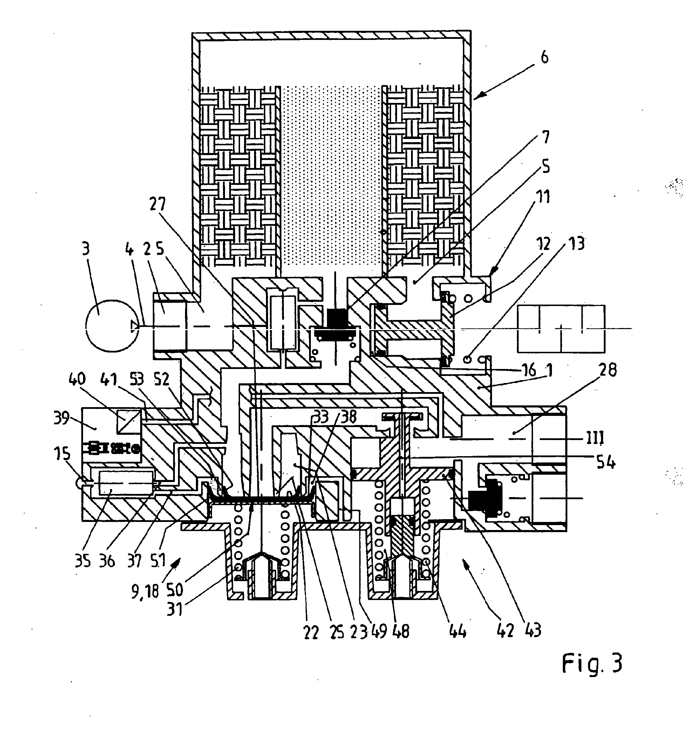

Fig. 3 zeigt eine weitere konstruktive Bauart der Ausbildung des Überströmventils 18 mit begrenzter Rückströmung. Das Überströmventil 18 besitzt hier einen Membrankolben 50, der auch hier auf der Feder 31 abgestützt ist. Der Membrankolben 50 ist aus elastischem Material ausgebildet. Er besitzt randseitig eine Dichtlippe 51 und eine weitere auf einem kleineren Durchmesser angeordnete Lippe 52, die mit einem eingezogenen Gehäuserand 53 eine Dichtfunktion erfüllt, so dass hier zwischen der Dichtlippe 51 und der Lippe 52 die dritte Wirktläche 33 verwirklicht wird, die auch hier über ein Magnetventil 35 angesteuert wird. Ansonsten ist auch hier der eingezogene Rand 25 vorgesehen, der die erste Wirkfläche von der zweiten Wirkfläche abtrennt. Auch hier sind die drei Wirkflächen 22, 27, 33 anströmseitig auf der dem Anströmraum 23 zugekehrten Seite des Membrankolbens 50 vorgesehen. Die Wirkungsweise dieses Überströmventils 18 mit begrenzter Rückströmung ist prinzipiell gleich zu der Wirkungsweise der anderen gezeigten und beschriebenen Ausführungsform der Fig. 1 und 2.

Fig. 3 zeigt eine weitere Realisierungsmöglichkeit für den Druckbegrenzer 42. Auch hier weist der Druckbegrenzer 42 einen Kolben 43 auf, der auf einer Begrenzungsfeder 44 abgestützt ist. Der Kolben 43 ist hier druckentlastet ausgebildet und besitzt eine Bohrung 54, über die beidseitig vorgesehene gleichgroße Flächen von dem gleichen Druck beaufschlagt sind. Auch hier ist der Betätigungsraum 48 über die Verbindungsleitung 49 an den Wirkraum 38 der dritten Wirkfläche 33 angeschlossen. Damit kann auch hier der Kolben 43 des Druckbegrenzers 42 im Öffnungssinne beaufschlagt werden, sobald das Magnetventil 35 umschaltet.

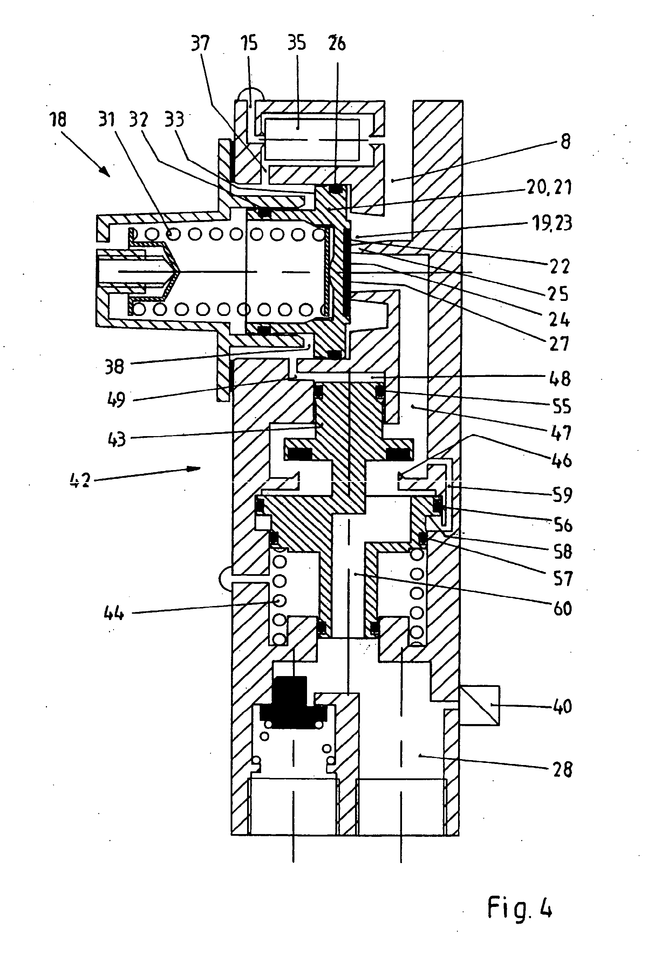

Fig. 4 zeigt eine weitere Ausführungsmöglichkeit des Überströmventils 18 und des Druckbegrenzers 42 in Verbindung mit einem Magnetventil 35, welches in stromlosem Zustand geöffnet ist. Das Magnetventil 35 besitzt auch hier einen eigenen Entlüftungsanschluss 15. Das Überströmventil 18 wird über die Leitung 8 und die Leitung 19 mit Druckluft versorgt. Die bewegliche Wand 20 ist auch hier als Stufenkolben 21 ausgebildet. Anströmseitig ist die erste Wirkfläche 22 zwischen einem Rand 25 und einer Dichtung 26 gebildet. Dort befindet sich zugleich der Anströmraum 23. Die bewegliche Wand 22 weist weiterhin die Dichtungsplatte 24 auf, die mit dem eingezogenen Rand 25 die zweite Wirkfläche 27 bildet. Der Stufenkolben 21 ist auch hier auf einer einstellbaren Feder 31 abgestützt. Der Stufenkolben weist eine weitere Dichtung 32 auf, die aber hier auf einem kleineren Durchmesser als die Dichtung 26 vorgesehen ist. Zwischen den Dichtungen 26 und 32 wird eine dritte Wirkfläche 33 geschaffen, die aber hier auf der Rückseite des Stufenkolbens 21 angeordnet ist. Die Wirkfläche 33 ist kleiner als die Wirkfläche 22 bemessen. Von dem Magnetventil 35 führt die Steuerleitung 37 zu der dritten Wirkfläche 33 bzw. dem dort gebildeten Wirkraum 38. Von dem Wirkraum 38 führt die Verbindungsleitung 49 zu dem Druckbegrenzer 42. Der Druckbegrenzer 42 weist auch hier einen Kolben 43 auf, der auf der Begrenzungsfeder 44 abgestützt ist. Der Betätigungsraum 48 des Kolbens 43 ist hier auf der anderen Seite angeordnet. Die betreffende Wirkfläche wird von einer Dichtung 55 festgelegt. Der Kolben 43 bildet mit einem Rand 46 ein Durchlassventil, zu dem die Leitung 47 von dem Überströmventil 18 herangeführt ist. Rückseitig wird an dem Kolben 43 durch Dichtungen 56 und 57 eine Wirkfläche 58 bestimmt, die gleich groß bemessen ist wie die Wirkfläche, die durch die Dichtung 55 festgelegt ist. Eine Umgehungsleitung 59 stellt die Verbindung zu der Leitung 47 her. Ein Kanal 60 durchsetzt den Kolben 43 und führt zu der Leitung 28 des betreffenden Kreises und zugleich über ein Rückschlagventil zu einem weiteren angeschlossenen Kreis.

Die Wirkungsweise der in Fig. 4 dargestellten Einheit aus Überströmventil 18 und Druckbegrenzer 42, die an sich jedem Verbraucherkreis zugeordnet sein kann, ist folgende: Das Magnetventil 35 ist stromlos geöffnet, wie in Fig. 4 dargestellt. Demzufolge wirkt sich die vom Kompressor gelieferte im Druck ansteigende Luft der Zentralbohrung 8 einerseits druckmäßig auf der ersten Wirkfläche 22 aus. Gleichzeitig gelangt die Druckluft auf die dritte Wirkfläche 33. Die bewegliche Wand 20 wird in Abhängigkeit der Differenzfläche zwischen den Wirkflächen 22 und 33 öffnen, so dass Druckluft aus der Zentralbohrung 8 in die Leitung 47 zum Druckbegrenzer 42 strömen kann. Der Kolben 43 des Druckbegrenzers 42 möge so bemessen sein, dass sein Durchlassventil mit dem Rand 46 trotz Einwirken des Druckes im Betätigungsraum 48 in der geöffneten Stellung steht. Sobald der Druck in der Leitung 47 nach dem Öffnen des Überströmventils 18 ansteigt, gelangt diese Druckluft in die Leitung 28 zum betreffenden Kreis. Gleichzeitig wird die von der Dichtung 56 eingeschlossene Wirkfläche mit diesem Druck beaufschlagt, so dass sich bei steigendem Druck gegen die Kraft der Begrenzungsfeder 44 eine Schließstellung ergibt. Damit wird der Druck in der Leitung 28 und dem nachgeschalteten Kreis entsprechend begrenzt.

Beim Umschalten des Magnetventils 35 in die Schließstellung wird der Wirkraum 38 und der Betätigungsraum 48 entlüftet. Das Überströmventil 18 bleibt geöffnet. Durch den Wegfall der Druckbeaufschlagung im Betätigungsraum 48 wird der Kolben 43 nach oben verfahren, so dass er sein Durchlassventil mit dem Rand 46 öffnet. Damit ergibt sich die Möglichkeit, in der Leitung 28 einen höheren Druck aufzubauen, also die Druckbegrenzung des Druckbegrenzers 42 zu beseitigen. Entsprechendes gilt für ein Nachströmen von Druckluft bei Verbrauch in dem betreffenden Kreis.

Wenn aus irgendwelchen Gründen der Druck in der Zentralbohrung 8 niedriger ist als der Schließdruck des Überströmventils 18, dann wird dieses in die Schließstellung überführt. Durch Umschalten des Magnetventils 35 in die Schließstellung kann die Wirkfläche 33 entlüftet und damit trotzdem ein Öffnen des Überströmventils 18 erreicht werden. Damit ergibt sich auch in diesem Falle die Möglichkeit, durch einen Schaltvorgang Druckluft in den betreffenden Kreis nachzuspeisen.

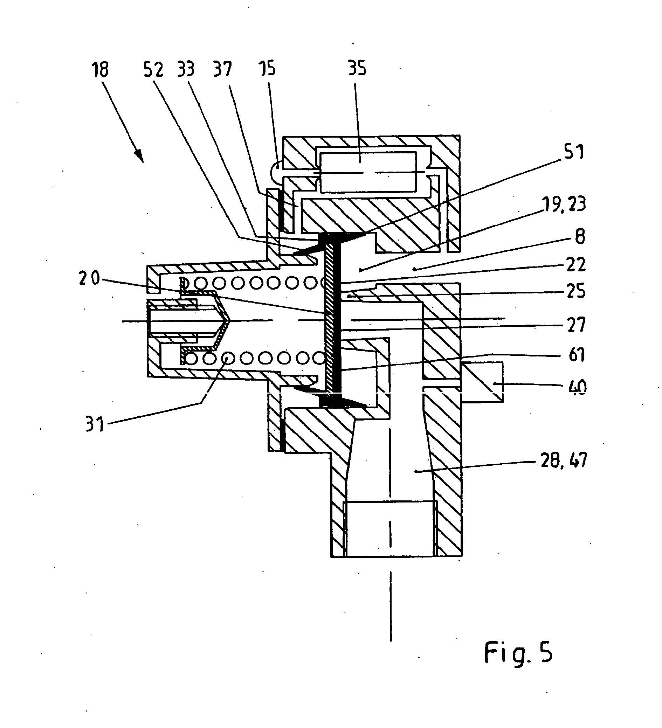

Fig. 5 verdeutlicht eine weitere Ausführungsmöglichkeit des Überströmventils 18, und zwar in Verbindung mit einem Magnetventil 35, welches, wie in Fig. 4, in stromlosem Zustand geöffnet ist. Das Überströmventil 18 ist hier als Membranventil ausgebildet. Über einen festen Körper, der auf der Feder 31 abgestützt ist, ist eine Dichtmanschette 61 gestülpt, die mit ihrem äußeren Rand die Dichtlippe 51 bildet. Zwischen der Dichtlippe 51 und dem Rand 25 wird die erste Wirkfläche 22 festgelegt. Der Rand 25 schließt die zweite Wirkfläche 27 ein. Auf der Rückseite ist an der Dichtmanschette 61 eine Lippe 52 vorgesehen. Zwischen der Dichtlippe 51 und der Lippe 52 wird die dritte Wirkfläche 33 gebildet. Von dem Überströmventil 18 zweigt die Leitung 28 ab, wenn kein Druckbegrenzer nachgeschaltet ist. Anderenfalls handelt es sich um die Leitung 47 (Fig. 4).

Das Überströmventil 18 gemäß Fig. 5 besitzt die gleiche Funktion wie das Überströmventil 18 gemäß Fig. 4.

### BEZUGSZEICHENLISTE

1 - Gehäuse
2 - Anschluss
3 - Kompressor
4 - Verbindungsleitung
5 - Verteilungsraum
6 - Lufttrockner
7 - Rückschlagventil
8 - Zentralbohrung
9 - Mehrkreisschutzventil
10 - Druckregler
11 - Auslassventil
12 - Kolben
13 - Schließfeder
14 - Magnetventil
15 - Entlüftungsanschluss
16 - Leitung
17 - Betätigungskolben
18 - Überströmventil
19 - Leitung
20 - bewegliche Wand
21 - Stufenkolben
22 - erste Wirkfläche
23 - Anströmraum
24 - Dichtungsplatte
25 - Rand
26 - Dichtung
27 - zweite Wirkfläche
28 - Leitung
29 - Anschluss
30 - Vorratsbehälter
31 - Feder
32 - Dichtung
33 - dritte Wirkfläche
34 - Rückraum
35 - Magnetventil
36 - Leitung
37 - Steuerleitung
38 - Wirkraum
39 - Steuereinheit
40 - Druckspannungswandler
41 - Leitungen
42 - Druckbegrenzer
43 - Kolben
44 - Begrenzungsfeder
45 - Einsatz
46 - Rand
47 - Leitung
48 - Betätigungsraum
49 - Verbindungsleitung
50 - Membrankolben
51 - Dichtlippe
52 - Lippe
53 - Gehäuserand
54 - Bohrung
55 - Dichtung
56 - Dichtung
57 - Dichtung
58 - Wirkfläche
59 - Umgehungsleitung
60 - Kanal
61 - Dichtmanschette

## Patentansprüche

1. Druckluftaufbereitungseinrichtung für Kraftfahrzeug-Druckluftanlagen, mit einem Druckregler (10), einem Lufttrockner (6) und einem Mehrkreisschutzventil (9), wobei das Mehrkreisschutzventil (9) mindestens ein Magnetventil (35) mit eigenem Entlüftungsanschluss (15) und für jeden Kreis ein Überströmventil (18) mit begrenzter Rückströmung beinhaltet und jedes Überströmventil (18) eine bewegliche Wand (20) aufweist, die einen Anströmraum (23) von einem Rückraum (34) mit Feder (31) abteilt, wobei das Überströmventil (18) eine über das Magnetventil (35) beaufschlagbare Wirkfläche aufweist, **dadurch gekennzeichnet, dass** die über das Magnetventil (35) direkt beaufschlagbare Wirkfläche (33) auf der dem Anströmraum (23) zugekehrten Seite der beweglichen Wand (20) des Überströmventils (18) angeordnet ist.

2. Druckluftaufbereitungseinrichtung für Kraftfahrzeug-Druckluftanlagen, mit einem Druckregler (10), einem Lufttrockner (6) und einem Mehrkreisschutzventil (9), wobei das Mehrkreisschutzventil (9) mindestens ein Magnetventil (35) mit eigenem Entlüftungsanschluss (15) und für jeden Kreis ein Überströmventil (18) mit begrenzter Rückströmung beinhaltet und jedes Überströmventil (18) eine bewegliche Wand (20) aufweist, die einen Anströmraum (23) von einem Rückraum (34) mit Feder (31) abteilt, wobei das Überströmventil (18) eine über das Magnetventil (35) beaufschlagbare Wirkfläche aufweist, **dadurch gekennzeichnet, dass** die über das Magnetventil (35) indirekt beaufschlagbare Wirkfläche (33) auf der dem Anströmraum (23) abgekehrten Seite der beweglichen Wand (20) des Überströmventils (18) angeordnet ist.

3. Druckluftaufbereitungseinrichtung nach Anspruch 1, **dadurch gekennzeichnet, dass** das Magnetventil (35) mit eigenem Entlüftungsanschluss (15) so angeordnet und geschaltet ist, dass es in erregtem Zustand den Entlüftungsanschluss (15) absperrt und den Anströmraum (23) mit dem der Wirkfläche (33) zugeordneten Wirkraum (38) verbindet.

4. Druckluftaufbereitungseinrichtung nach Anspruch 3, **dadurch gekennzeichnet, dass** die bewegliche Wand (20) auf ihrer dem Anströmraum (23) zugekehrten Seite eine erste, anströmseitig dauernd beaufschlagte Wirkfläche (22), eine zweite, abströmseitig dauernd beaufschlagte Wirkfläche (27) und die dritte, über das Magnetventil (35) beaufschlagbare Wirkfläche (33) aufweist.

5. Druckluftaufbereitungseinrichtung nach Anspruch 2, **dadurch gekennzeichnet, dass** das Magnetventil (35) mit eigenem Entlüftungsanschluss (15) so angeordnet und geschaltet ist, dass es in erregtem Zustand den Entlüftungsanschluss (15) geöffnet hält und eine die bewegliche Wand (20) überbrückende Umgehungsleitung absperrt, so dass die auf der dem Anströmraum abgekehrten Seite angeordnete Wirkfläche nicht mehr belastet ist.

6. Druckluftaufbereitungseinrichtung nach Anspruch 4 oder 5 **dadurch gekennzeichnet, dass** die bewegliche Wand (20) als Stufenkolben (21) ausgebildet ist.

7. Druckluftaufbereitungseinrichtung nach Anspruch 4 oder 5, **dadurch gekennzeichnet, dass** die bewegliche Wand (20) als Membrankolben (50) ausgebildet ist.

8. Druckluftaufbereitungseinrichtung nach den Ansprüchen 1, 3 und 4 **dadurch gekennzeichnet, dass** dem Überströmventil (18) mit begrenzter Rückströmung ein Druckbegrenzer (42) nachgeschaltet ist, der einen in Öffnungsrichtung auf einer Begrenzungsfeder (44) abgestützten Kolben (43) aufweist und auf der der Begrenzungsfeder (44) zugekehrten Seite eine Betätigungsfläche aufweist, deren Betätigungsraum (48) über eine Verbindungsleitung (49) an den Wirkraum (38) der dritten Wirkfläche (33) des Überströmventils (18) angeschlossen ist.

9. Druckluftaufbereitungseinrichtung nach Anspruch 8, **dadurch gekennzeichnet, dass** der Kolben (43) des Druckbegrenzers (42) eine eine Rückströmung von der Leitung (28) in die Leitung (47) gestattende Lippe aufweist.

10. Druckluftaufbereitungseinrichtung nach den Ansprüchen 2 und 5, **dadurch gekennzeichnet, dass** dem Überströmventil (18) mit begrenzter Rückströmung ein Druckbegrenzer (42) nachgeschaltet ist, der einen in Öffnungsrichtung auf einer Begrenzungsfeder abgestützten Kolben aufweist und auf der der Begrenzungsfeder abgekehrten Seite eine Entlastungsfläche aufweist, deren Betätigungsraum (48) über eine Verbindungsleitung (49) an den Wirkraum der dritten Wirkfläche (33) des Überströmventils (18) angeschlossen ist.

11. Druckluftaufbereitungseinrichtung nach Anspruch 10, **dadurch gekennzeichnet, dass** der Kolben (43) des Druckbegrenzers (42) an der Stelle der Dichtung (56) eine eine Rückströmung von der Leitung (28) in die Leitung (47) gestattende Lippe aufweist.

## Claims

1. A compressed air control apparatus for compressed air systems of motor vehicles, comprising a pressure controller (21), an air dryer (6) and a multi circuit protection valve (9), the multi circuit protection valve (9) comprising at least one solenoid valve (35) including a venting connection (15) leading to the atmosphere and a plurality of overflow valves (18) with restricted backflow each of the overflow valves being associated with one of the circuits, each overflow valve (18) including a valve body (20) to separate a flow chamber (23) from a rear chamber (34) containing a spring (31), the overflow valve (18) showing an effective surface being designed and arranged to be directly impinged with pressure by the solenoid valve (35), **characterized in that** the effective surface (33) being directly impinged with pressure by the solenoid valve (35) is located on the one side of the valve body (20) of the overflow valve (18) facing the flow chamber (23).

2. A compressed air control apparatus for compressed air systems of motor vehicles, comprising a pressure controller (21), an air dryer (6) and a multi circuit protection valve (9), the multi circuit protection valve (9) comprising at least one solenoid valve (35) including a venting connection (15) leading to the atmosphere and a plurality of overflow valves (18) with restricted backflow each of the overflow valves being associated with one of the circuits, each overflow valve (18) including a valve body (20) to separate a flow chamber (23) from a rear chamber (34) containing a spring (31), the overflow valve (18) showing an effective surface being designed and arranged to be directly impinged with pressure by the solenoid valve (35), **characterized in that** the effective surface (33) being directly impinged with pressure by the solenoid valve (35) is located on the one side of the valve body (20) of the overflow valve (18) not facing the flow chamber (23).

3. The compressed air control apparatus of claim 1, **characterized in that** the solenoid valve (35) having its own venting connection (15) is designed and arranged in a way that it closes the venting connection and connects the flow chamber (23) with the effective chamber (38) assigned to the effective surface (33) in an excited position.

4. The compressed air control apparatus of claim 3, **characterized in that** the valve body (20) on its side facing the flow chamber (23) includes a first effective surface (22) being designed and arranged to be permanently impinged with upstream pressure, a second effective surface (27) being designed and arranged to be permanently impinged with downstream pressure, and the third effective surface (33) being designed and arranged to be directly impinged with pressure by the solenoid valve (35).

5. The compressed air control apparatus of claim 2, **characterized in that** the solenoid valve (35) having its own venting connection (15) is designed and arranged in a way that being in an exited position it keeps the venting connection (15) in an opened position and closes a bypass conduit bridging the valve body (20). to not impinge with pressure the effective surface being located on the one side of the valve body (20) of the overflow valve (18) not facing the flow chamber (23).

6. The compressed air control apparatus of claim 4 or 5, **characterized in that** the valve body (20) is designed as a step piston (21).

7. The compressed air control apparatus of claim 4 or 5, **characterized in that** the valve body (20) is designed as a membrane piston (50).

8. The compressed air control apparatus of claim 1, 3 and 4, **characterized in that** a pressure limiting device (42) is arranged downstream of the overflow valve (18) having restricted backflow, the pressure limiting device including a piston (43) being supported on a limiting spring (44) in an opening direction and having an actuation surface being located on the side facing the spring (44) and an actuation chamber (48) being connected to the effective chamber (38) of the third effective surface (33) of the overflow valve (18) by a connecting conduit (49).

9. The compressed air control apparatus of claim 8, **characterized in that** the piston (43) of the pressure limiting device (42) includes a lip element being designed and arranged to allow for backflow of compressed air from the conduit (28) to the conduit (47).

10. The compressed air control apparatus of claim 4, **characterized in that** a pressure limiting device (42) is arranged downstream of the overflow valve (18) having restricted backflow, the pressure limiting device including a piston being supported on the limiting spring in an opening direction and having a relief surface being located on the side not facing the spring, the actuation chamber (48) of the piston being connected to the effective chamber of the third effective surface (33) of the overflow valve (18) by a connecting conduit (49).

11. The compressed air control apparatus of claim 11, **characterized in that** the piston (43) of the pressure limiting device (42) at the location of the seal (56) includes a lip element being designed and arranged to allow for backflow of air from the conduit (28) to the conduit (47).

## Revendications

1. Dispositif de traitement d'air comprimé pour installations à air comprimé de véhicule automobile, comprenant un régulateur de pression (10), un déshydrateur d'air (6), et une vanne de protection multicircuits (9), la vanne de protection à plusieurs circuits (9) contenant au moins une vanne magnétique (35) avec branchement de purge propre (15) et pour chaque circuit une vanne de trop-plein (18) avec reflux limité et chaque vanne de trop-plein (18) présentant une paroi (20) mobile, qui sépare un espace d'arrivée du flux (23) d'un espace arrière (34) avec ressort (31), la vanne de trop-plein (18) présentant une surface active pouvant être alimentée par la vanne magnétique (35), **caractérisé en ce que** la surface active (33) pouvant être alimentée directement par la vanne magnétique (35) est disposée sur le côté, tourné vers l'espace de flux d'arrivée (23), de la paroi mobile (20) de la vanne de trop-plein (18).

2. Dispositif de traitement d'air comprimé pour installations à air comprimé de véhicule automobile, comprenant un régulateur de pression (10), un déshydrateur d'air (6), et une vanné de protection multicircuits (9), la vanne de protection multicircuits (9) contenant au moins une vanne magnétique (35) avec un branchement de purge propre (15) et pour chaque circuit une vanne de trop-plein (18) avec reflux limité, et chaque vanne de trop-plein (18) présentant une paroi (20) mobile qui sépare un espace d'arrivée du flux (23) d'un espace arrière (34) avec ressort (31), la vanne de trop-plein (18) présentant une surface active pouvant être alimentée au moyen de la vanne magnétique (35), **caractérisé en ce que** la surface active (33) pouvant être alimentée indirectement par la vanne magnétique (35) est disposée sur le côté, opposé à l'espace d'arrivée du flux (23), de la paroi (20) mobile de la vanne de trop-plein (18).

3. Dispositif de traitement d'air comprimé selon la revendication 1, **caractérisé en ce que** la vanne magnétique (35) avec branchement de purge propre (15) est disposée et commutée de telle sorte qu'elle bloque le branchement de purge (15) dans l'état excité et relie l'espace d'arrivée du flux (23) à l'espace actif (38) attribué à la surface active (33).

4. Dispositif de traitement d'air comprimé selon la revendication 3, **caractérisé en ce que** la paroi (20) mobile présente sur son côté tourné vers l'espace d'arrivée de flux (23) une première surface active, alimentée de façon continue côté arrivée du flux une seconde surface active (27) alimentée de façon continue côté sortie du flux et la troisième surface active (33) pouvant être alimentée par la vanne magnétique (35).

5. Dispositif de traitement d'air comprimé selon la revendication 2, **caractérisé en ce que** la vanne magnétique (35) avec branchement de purge propre (15) est disposée et commutée de telle sorte qu'elle maintient ouvert le branchement de purge (15) dans l'état excité et bloque une conduite de contournement qui enjambe la paroi (20) mobile, de sorte que la surface active disposée sur le côté opposé à l'espace d'arrivée du flux n'est plus chargée.

6. Dispositif de traitement d'air comprimé selon la revendication 4 ou 5, **caractérisé en ce que** la paroi (20) mobile est conçue comme un piston à gradins (21).

7. Dispositif de traitement d'air comprimé selon la revendication 4 ou 5, **caractérisé en ce que** la paroi (20) mobile est conçue comme un piston à membrane (50).

8. Dispositif de traitement d'air comprimé selon les revendications 1, 3 et 4, **caractérisé en ce qu'**en aval de la vanne de trop-plein (18) avec reflux limité est branché un limiteur de pression (42), qui présente un piston (43) soutenu dans le sens d'écoulement sur un ressort de délimitation (44) et présente sur le côté tourné vers le ressort de délimitation (44) une surface d'actionnement, dont l'espace d'actionnement (48) est raccordé par une conduite de liaison (49) à l'espace actif (38) de la troisième surface active (33) de la vanne de trop-plein (18).

9. Dispositif de traitement d'air comprimé selon la revendication 8, **caractérisé en ce que** le piston (43) du limiteur de pression (42) présente une lèvre permettant un reflux de la conduite (28) dans la conduite (47).

10. Dispositif de traitement d'air comprimé selon les revendications 2 et 5, **caractérisé en ce qu'**en aval de la vanne de trop-plein (18) avec reflux limité est branché un limiteur de pression (42) qui présente un piston soutenu dans le sens d'ouverture sur un ressort de délimitation et qui présente sur le côté opposé au ressort de délimitation une surface de décharge, dont l'espace d'actionnement (48) est raccordé par une conduite de liaison (49) à l'espace actif de la troisième surface active (33) de la vanne de trop-plein (18).

11. Dispositif de traitement d'air comprimé selon la revendication 10, **caractérisé en ce que** le piston (43) du limiteur de pression (42) présente à l'emplacement du joint (56) une lèvre permettant un reflux de la conduite (28) dans la conduite (47).
